# EUROPEAN PATENT SPECIFICATION

(11) **EP 4 632 870 B1**
(45) Date of publication and mention of the grant of the patent: **19.08.2026**
(21) Application number: 25169545.8
(22) Date of filing: 09.04.2025
(51) Int. Cl.: H01M 10/42, B60L 58/27, H01M 10/615, H01M 10/633, H01M 10/6571, H01M 10/48, H01M 10/667

(54) **HEATING CONTROL SYSTEM FOR PARALLEL-CONNECTED BATTERY PACKS**
HEIZUNGSSTEUERUNGSSYSTEM FÜR PARALLEL GESCHALTETE BATTERIEPACKS
SYSTÈME DE COMMANDE DE CHAUFFAGE POUR BLOCS-BATTERIES CONNECTÉS EN PARALLÈLE

(30) Priority: 12.04.2024 CN 202410441778
(43) Date of publication of application: 15.10.2025
(73) Proprietor: Solax Power Network Technology (Zhejiang) Co., Ltd., Hangzhou, Zhejiang 311500 (CN)
(72) Inventor: SUN, Tonghao, Hangzhou, Zhejiang 311500 (CN)
(74) Representative: Novagraaf International SA

(56) References cited:
- EP-A1- 3 595 079
- KR-A- 20150 071 758
- US-A1- 2023 062 270
- US-B2- 10 297 884

## Description

### TECHNICAL FIELD

The present application relates to the field of battery technologies, and in particular, to a heating control system for parallel-connected battery packs.

### BACKGROUND

A power battery is required to operate at an appropriate temperature to ensure its normal use. In a low-temperature environment, chemical reaction activity of a lithium-ion battery decreases, and safety incidents are more likely to occur. Therefore, the battery is required to be pre-heated before being charged in a low-temperature environment, and cannot be directly charged. Generally, there may be two power supply methods for pre-heating the battery. A first method is to heat the battery by using power supplied by the battery itself, while a second method is to heat the battery by using power supplied by an inverter.

In a parallel-connected battery packs scenario where a plurality of battery packs are connected in parallel, if each battery pack is required to be heated by using power supplied by the battery pack itself, due to interconnection of power lines of the battery packs, a circulating current is generated. As a result, the circulating current may damage battery cells of the battery packs at a low temperature.

Patent application document No. EP3595079A1 provides a heater control system for a battery pack and a method for the same. According to temperature deviations generated during heating operations of heaters provided in each battery pack, between battery packs and cells included in the battery packs, each heater is individually controlled to allow the battery packs and the battery cells therein to be heated to a uniform temperature state.

Patent application document No. KR1020150071758A provides a battery heating system and a control method thereof. The battery heating system is disclosed for heating the temperature of each battery module in a battery pack composed of a plurality of battery modules, the system including: a resistive heater installed to enable heating the temperature of each battery module and individually connected to the battery module to be heated via a power connection circuit to receive operating power; a semiconductor switch installed on the power connection circuit connecting the resistive heater and the battery module in each battery module, and switchably operated to allow the power of the battery module to be selectively supplied to or blocked from the resistive heater; a temperature sensor for sensing the temperature of each battery module; and a battery management system for controlling the switching operation of the semiconductor switch based on the temperature of the battery module sensed by the temperature sensor.

Patent application document No. US10297884B2 provides a battery heating system integrated by two subsystems, a heating system branch and a battery pack system branch, the battery pack system branch includes a battery package and a plurality of relays, the battery package includes a plurality of battery modules and heating subsystems, the heating subsystem includes a plurality of heaters, the battery module is assembled with at least one heater, and the heater is arranged at the bottom or side of the battery module. The battery heating system can satisfy two modes of driving-heating and parking-heating-charging, and provide experience of various modes to users; and the installing location of the heater is various, assembling is simple and convenient, which is suitable for different application situations; the connecting manner of the circuit of the heating system is various, connection of the circuit is simple; which can reduce the non-uniformity of battery temperature caused by heating.

Patent application document No. US20230062270A1 provides a method for heating a battery pack, where the battery pack is connected to an inductive load via a converter and the method includes: controlling on and off of a switch module in the converter upon receiving a heating request, so as to control discharging and charging between the battery pack and the inductive load, connecting the battery pack and an auxiliary heating mechanism in parallel during a discharging stage of the battery pack; and disconnecting the auxiliary heating mechanism from the battery pack during a charging stage of the battery pack. This application further relates to a battery heating system and an electric apparatus.

### SUMMARY

To resolve the foregoing problem, the present application provides a heating control system for parallel-connected battery packs, which may resolve a charging problem due to a circulating current between parallel-connected battery packs under a low-temperature condition.

The present application provides a heating control system for parallel-connected battery packs, including a first battery pack and at least one second battery pack that are connected in parallel. The first battery pack includes a first relay unit, a first battery unit, a first heating element, and a first battery management unit. Each of the at least one second battery pack includes a second relay unit, a second battery unit, a second heating element, and a second battery management unit. The first relay unit is configured to enable the first battery unit and the first heating element to be electrically connected or disconnected, and the first relay unit is further configured to enable the first heating element and an inverter to be electrically connected or disconnected, or enable the first heating element and the second battery unit to be electrically connected or disconnected. The second relay unit is configured to enable the second battery unit and the second heating element to be electrically connected or disconnected, and the second relay unit is further configured to enable the second heating element and the inverter to be electrically connected or disconnected, or enable the second heating element and the first battery unit to be electrically connected or disconnected. In response to both a temperature of the first battery unit and a temperature of the second battery unit being less than a first threshold, each of the first battery management unit and the second battery management unit issuing a first heating request, and a voltage of the second battery unit being greater than a voltage of the first battery unit, the first battery management unit is configured to: control the second relay unit to enable the second heating element and the second battery unit to be electrically connected; control the first relay unit to enable the first heating element and the second battery unit to be electrically connected; and control the first relay unit to enable the first heating element and the first battery unit to be electrically disconnected, where the first heating request indicates a request for self-powered heating.

In an optional implementation, in response to the temperature of the first battery unit being greater than or equal to a second threshold, and each of the first battery management unit and the second battery management unit issuing the first heating request, the first battery management unit is configured to: control the first relay unit to enable the first heating element and the first battery unit to be electrically connected; control the second relay unit to enable the second heating element and the first battery unit to be electrically connected; and control the second relay unit to enable the second heating element and the second battery unit to be electrically disconnected, where the second threshold is greater than the first threshold.

In an optional implementation, in response to both the temperature of the first battery unit and the temperature of the second battery unit being less than the first threshold, and either of the first battery management unit and the second battery management unit issuing a second heating request, the first battery management unit is configured to: control the first relay unit to enable the first heating element and the inverter to be electrically connected, and control the first relay unit to enable the first heating element and the first battery unit to be electrically disconnected; and control the second relay unit to enable the second heating element and the inverter to be electrically connected, and control the second relay unit to enable the second heating element and the second battery unit to be electrically disconnected, where the second heating request indicates a request for inverter-powered heating.

In an optional implementation, in response to a minimum of the temperature of the first battery unit and the temperature of the second battery unit being greater than or equal to a third threshold, the first battery management unit is configured to: control the first relay unit to enable the first heating element and the first battery unit to be electrically connected; and control the second relay unit to enable the second heating element and the second battery unit to be electrically connected.

In an optional implementation, in response to the temperature of the first battery unit being greater than or equal to a fourth threshold, the first battery management unit is configured to: control the first relay unit to enable the first heating element and the second battery unit to be electrically disconnected.

In an optional implementation, in response to the temperature of the second battery unit being greater than or equal to a fourth threshold, the first battery management unit is configured to: control the second relay unit to enable the second heating element and the second battery unit to be electrically disconnected.

In an optional implementation, the first relay unit includes a first relay, a second relay, and a third relay, and the second relay unit includes a fourth relay, a fifth relay, and a sixth relay. The first relay is electrically connected between a first end of the inverter and a negative electrode of the first battery unit, the first relay is further electrically connected between the first end of the inverter and a first end of the first heating element, the second relay is electrically connected between a second end of the inverter and a second end of the first heating element, and the third relay is electrically connected between the second end of the inverter and a positive electrode of the first battery unit. The fourth relay is electrically connected between the first end of the inverter and a negative electrode of the second battery unit, the fourth relay is further electrically connected between the first end of the inverter and a first end of the second heating element, the fifth relay is electrically connected between the second end of the inverter and a second end of the second heating element, and the sixth relay is electrically connected between the second end of the inverter and a positive electrode of the second battery unit.

In an optional implementation, in response to both the temperature of the first battery unit and the temperature of the second battery unit being less than the first threshold, each of the first battery management unit and the second battery management unit issuing the first heating request, and the voltage of the second battery unit being greater than the voltage of the first battery unit, the first battery management unit is configured to: control the fourth relay, the fifth relay, and the sixth relay to be all turned on; and control both the first relay and the second relay to be turned on, and control the third relay to be turned off.

In an optional implementation, in response to the temperature of the first battery unit being greater than or equal to a second threshold, the first battery management unit is configured to: control the first relay, the second relay, and the third relay to be all turned on, where the second threshold is greater than the first threshold.

In an optional implementation, in response to both the temperature of the first battery unit and the temperature of the second battery unit being less than the first threshold, and either of the first battery management unit and the second battery management unit issuing a second heating request, the first battery management unit is configured to: control both the first relay and the second relay to be turned on, and control the third relay to be turned off; and control both the fourth relay and the fifth relay to be turned on, and control the sixth relay to be turned off, where the second heating request indicates a request for inverter-powered heating.

In an optional implementation, in response to a minimum of the temperature of the first battery unit and the temperature of the second battery unit being greater than or equal to a third threshold, the first battery management unit is configured to: control the first relay, the second relay, and the third relay to be all turned on; and control the fourth relay, the fifth relay, and the sixth relay to be all turned on.

In an optional implementation, in response to the temperature of the first battery unit being greater than or equal to a fourth threshold, the first battery management unit is configured to: control both the first relay and the third relay to be turned on, and control the second relay to be turned off.

In an optional implementation, in response to the temperature of the second battery unit being greater than or equal to a fourth threshold, the first battery management unit is configured to: control both the fourth relay and the sixth relay to be turned on, and control the fifth relay to be turned off.

According to the heating control system for the parallel-connected battery packs in the present application, state information (such as a temperature) and heating request information of the parallel-connected battery packs are aggregated by the first battery pack, and heating modes of the battery packs are controlled by the first battery pack, such that only one battery pack of the parallel-connected battery packs is allowed to operate in self-powered heating under a low-temperature condition, thereby resolving a charging problem due to a circulating current between parallel-connected battery packs under a low-temperature condition.

### BRIEF DESCRIPTION OF THE DRAWINGS

FIG. 1 is a schematic diagram of a heating control system for parallel-connected battery packs according to an embodiment of the present application.
FIG. 2 is a schematic diagram of battery packs in an energy storage system according to an embodiment of the present application.
FIG. 3 is a circuit diagram of a control unit in a battery pack according to an embodiment of the present application.
FIG. 4 is a circuit diagram of a heating unit in a battery pack according to an embodiment of the present application.
FIG. 5 is an equivalent circuit diagram of battery packs according to an embodiment of the present application.

### DETAILED DESCRIPTION OF THE EMBODIMENTS

In embodiments of the present application, the terms such as "first" and "second" are merely used to distinguish between different objects, and cannot be understood as indicating or implying relative importance, or indicating or implying a sequence. For example, a first application, a second application, and the like are used to distinguish between different applications, and are not used to describe a specific sequence of applications. Features limited by "first" or "second" may explicitly or implicitly include one or more of the features.

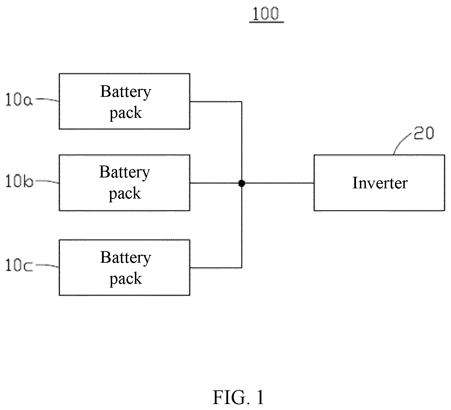

Referring to FIG. 1, FIG. 1 is a schematic diagram of a system architecture for paralleling a heating control system 100 for parallel-connected battery packs according to an embodiment of the present application. The heating control system 100 for the parallel-connected battery packs may include parallel-connected battery packs.

In this embodiment, the parallel-connected battery packs may include a plurality of battery packs connected in parallel (only three battery packs 10a, 10b, and 10c are used as examples for description in FIG. 1, and there may be more than three or less than three). That is, the plurality of battery packs are connected in parallel to form the heating control system 100 for the parallel-connected battery packs.

As shown in FIG. 1, the battery packs 10a, 10b, and 10c are connected in parallel by using a communications bus. For example, the battery pack 10a is connected to the battery pack 10b and the battery pack 10c by using a Controller Area Network (CAN) bus.

The heating control system 100 for the parallel-connected battery packs may further include an inverter 20. The inverter 20 is connected to the battery packs 10a, 10b, and 10c in parallel by using the CAN bus.

In this embodiment, one battery pack in the heating control system 100 for the parallel-connected battery packs is used as a master, and the remaining battery packs are used as slaves. In a possible example, the battery pack 10a may be the master in the heating control system 100 for the parallel-connected battery packs, and the battery packs 10b and 10c may be the slaves in the heating control system 100 for the parallel-connected battery packs.

A battery is required to operate at an appropriate temperature to ensure its normal use. Therefore, in a use scenario of a low-temperature environment, the battery packs 10a, 10b, and 10c are required to be pre-heated before being charged in a low-temperature environment, and cannot be directly charged.

The following describes a working principle of the heating control system 100 for the parallel-connected battery packs in the present application by using an example in which the battery pack 10a is the master, and the battery packs 10b and 10c are the slaves.

In an example, the battery packs 10b and 10c are used as the slaves in the heating control system 100 for the parallel-connected battery packs, and the battery packs 10b and 10c may transmit information to the battery pack 10a.

As the master in the heating control system 100 for the parallel-connected battery packs, the battery pack 10a may receive, by using the CAN bus, the information transmitted by the battery packs 10b and 10c, and control a heating mode of each battery pack in the heating control system 100 for the parallel-connected battery packs based on the information transmitted by the battery packs 10b and 10c.

It may be understood that structures of the battery packs 10a, 10b, and 10c are identical. The following uses the structure of the battery pack 10a as an example for description.

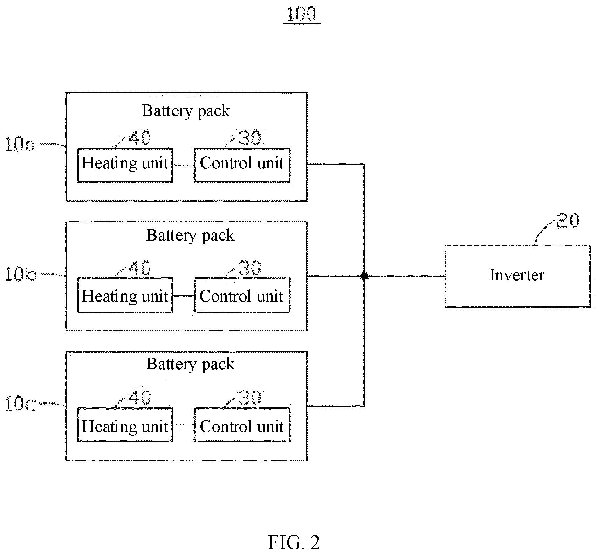

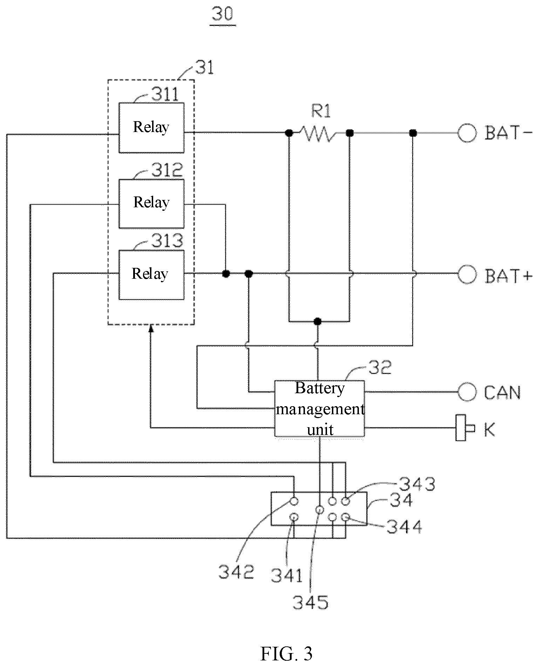

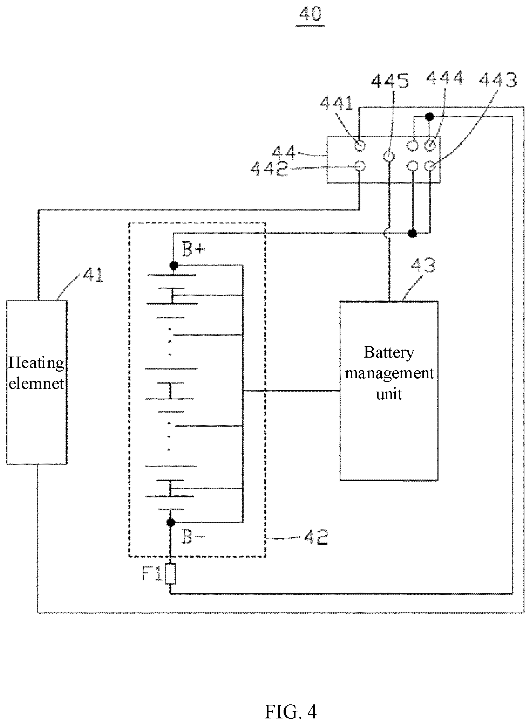

Referring to FIG. 2 to FIG. 4, each of the battery packs 10a, 10b, and 10c may include a control unit 30 and a heating unit 40.

The control unit 30 is electrically connected to the heating unit 40.

The control unit 30 may include a first terminal BAT+, a second terminal BAT-, and a third terminal CAN. It may be understood that the first terminal BAT+ is a positive terminal of a battery pack, and the second terminal BAT- is a negative terminal of the battery pack. Both the first terminal BAT+ and the second terminal BAT- are electrically connected to an inverter 20, to implement power transmission between the battery pack and the inverter 20. The first terminal BAT+ and the second terminal BAT- of the battery pack 10a are electrically connected to the first terminal BAT+ and the second terminal BAT- of the battery pack 10b, respectively. The first terminal BAT+ and the second terminal BAT- of the battery pack 10a are also electrically connected to the first terminal BAT+ and the second terminal BAT- of the battery pack 10c, respectively. The third terminal CAN of the battery pack 10a may also be connected to the third terminal CAN of the battery pack 10b and the third terminal CAN of the battery pack 10c by using the CAN bus. The third terminal CAN of the battery pack 10a, the third terminal CAN of the battery pack 10b, and the third terminal CAN of the battery pack 10c are also connected to the inverter 20 by using the CAN bus, so as to implement information exchange between the inverter 20 and the third terminal CAN of each of the battery pack 10a, the battery pack 10b, and the battery pack 10c.

The control unit 30 includes a relay unit 31, a battery management unit 32, and a first connector 34. The heating unit 40 may include a heating element 41, a battery unit 42, a battery management unit 43, and a second connector 44.

An end of the relay unit 31 is electrically connected to the first terminal BAT+ and the second terminal BAT-, and another end of the relay unit 31 is electrically connected to the first connector 34. The battery management unit 32 is electrically connected to the relay unit 31 to control a state of the relay unit 31.

The relay unit 31 includes a relay 311, a relay 312, and a relay 313. The first connector 34 includes a first connection end 341, a second connection end 342, a third connection end 343, a fourth connection end 344, and a fifth connection end 345.

The relay 311 is electrically connected between a first end of a current sensor R1 and the first connection end 341 of the first connector 34, and the relay 311 is also electrically connected between the first end of the current sensor R1 and the fourth connection end 344 of the first connector 34. A second end of the current sensor R1 is electrically connected to the second terminal BAT-. A current sampling pin of the battery management unit 32 is electrically connected to both ends of the current sensor R1. The relay 312 is electrically connected between the first terminal BAT+ and the second connection end 342 of the first connector 34. The relay 313 is electrically connected between the first terminal BAT+ and the third connection end 343 of the first connector 34. In this embodiment, three control pins of the battery management unit 32 may be respectively connected to the relays 311, 312, and 313, so as to control the relays 311, 312, and 313, respectively. For example, the battery management unit 32 may control the relay 311 to be turned on, such that the first connection end 341 of the first connector 34 and the second terminal BAT- are electrically connected. The battery management unit 32 may alternatively control the relay 311 to be turned off, such that the first connection end 341 of the first connector 34 and the second terminal BAT-are electrically disconnected. The battery management unit 32 may control the relay 312 to be turned on, such that the second connection end 342 of the first connector 34 and the first terminal BAT+ are electrically connected. The battery management unit 32 may alternatively control the relay 312 to be turned off, such that the second connection end 342 of the first connector 34 and the first terminal BAT+ are electrically disconnected. The battery management unit 32 may control the relay 313 to be turned on, such that the first terminal BAT+ and the third connection end 343 of the first connector 34 may be electrically connected. The battery management unit 32 may alternatively control the relay 313 to be turned off, such that the first terminal BAT+ and the third connection end 343 of the first connector 34 are electrically disconnected.

In other words, in the battery pack 10a, the relay unit 31 may be configured to enable the battery unit 42 and the heating element 41 to be electrically connected or disconnected; and the relay unit 31 is further configured to enable the heating element 41 and the inverter 20 to be electrically connected or disconnected, or enable the heating element 41 and the battery unit 42 of each of the battery packs 10b and 10c to be electrically connected or disconnected.

Similarly, in each of the battery packs 10b and 10c, the relay unit 31 may be configured to enable the battery unit 42 and the heating element 41 to be electrically connected or disconnected; and the relay unit 31 is further configured to enable the heating element 41 and the inverter 20 to be electrically connected or disconnected, or enable the heating element 41 and the battery unit 42 of the battery pack 10a to be electrically connected or disconnected.

A communication pin of the battery management unit 32 is electrically connected to the third terminal CAN, that is, the battery management unit 32 of the battery pack 10a may establish a communication connection with the battery management unit 32 of each of the battery packs 10b and 10c by using the CAN bus.

A first voltage sampling pin of the battery management unit 32 is electrically connected between the second terminal BAT- and the current sensor R1. A second voltage sampling pin of the battery management unit 32 is electrically connected to a connection point between the relay 313 and the first terminal BAT+. It may be understood that the battery management unit 32 may detect a current on a heating circuit by using the current sensor R1, so as to determine whether an open circuit fault occurs in the heating circuit.

A key switch K is further provided on the battery pack 10a, and the key switch K is connected to a power-on pin of the battery management unit 32. When the key switch K is pressed, the power-on pin of the battery management unit 32 receives a power-on control signal, and powers on the battery management unit 32.

It may be understood that, in this embodiment, a signal pin of the battery management unit 32 is electrically connected to the fifth connection end 345 of the first connector 34.

In this embodiment, the heating element 41 may be arranged at a position near the battery unit 42 of the battery pack 10a. The heating element 41 is configured to heat the battery unit 42 to increase a temperature of the battery unit 42. Optionally, the heating element 41 may be a heating film.

The second connector 44 includes a sixth connection end 441, a seventh connection end 442, an eighth connection end 443, a ninth connection end 444, and a tenth connection end 445.

The seventh connection end 442 of the second connector 44 is electrically connected to a second end of the heating element 41, and a first end of the heating element 41 is electrically connected to the sixth connection end 441 of the second connector 44. The eighth connection end 443 of the second connector 44 is electrically connected to a positive electrode of the battery unit 42, and a negative electrode of the battery unit 42 is electrically connected to the ninth connection end 444 of the second connector 44 through a fuse F1. The tenth connection end 445 of the second connector 44 is electrically connected to a signal pin of the battery management unit 43.

Sampling pins of the battery management unit 43 are electrically connected to the battery unit 42, to collect a temperature of the battery unit 42 in real time. In a specific implementation process, the battery unit 42 includes a plurality of battery cells connected in series. A temperature sensor is provided on a surface of the battery cells, and the temperature sensor may be configured to sense a temperature of the battery cells, and transmit a sensed temperature to the battery management unit 43.

In this embodiment, the battery management unit 43 may further collect a voltage across both ends of the battery unit 42. The signal pin of the battery management unit 43 is electrically connected to the tenth connection end 445 of the second connector 44.

It may be understood that, in this embodiment, the first connector 34 is electrically connected to the second connector 44. Specifically, the first connection end 341 of the first connector 34 is electrically connected to the sixth connection end 441 of the second connector 44. The second connection end 342 of the first connector 34 is electrically connected to the seventh connection end 442 of the second connector 44. The third connection end 343 of the first connector 34 is electrically connected to the eighth connection end 443 of the second connector 44. The fourth connection end 344 of the first connector 34 is electrically connected to the ninth connection end 444 of the second connector 44. The fifth connection end 345 of the first connector 34 is electrically connected to the tenth connection end 445 of the second connector 44.

In other words, the second end of the heating element 41 is electrically connected to the first terminal BAT+ through the relay 312, and the first end of the heating element 41 is electrically connected to the second terminal BAT- through the relay 311. The positive electrode of the battery unit 42 is electrically connected to the first terminal BAT+ through the relay 313, and the negative electrode of the battery unit 42 is electrically connected to the second terminal BAT- through the relay 311.

The battery management unit 43 transmits collected state information such as a temperature, a voltage, and electric quantity of the battery unit 42 to the battery management unit 32 through the second connector 44 and the first connector 34.

For example, in the battery pack 10a, the battery management unit 43 transmits collected state information such as a temperature, a voltage, and electric quantity of the battery unit 42 to the battery management unit 32 through the second connector 44 and the first connector 34.

In the battery pack 10b, the battery management unit 43 transmits collected state information such as a temperature, a voltage, and electric quantity of the battery unit 42 to the battery management unit 32 through the second connector 44 and the first connector 34.

**In** the battery pack 10c, the battery management unit 43 transmits collected state information such as a temperature, a voltage, and electric quantity of the battery unit 42 to the battery management unit 32 through the second connector 44 and the first connector 34.

It may be understood that in the heating control system 100 for the parallel-connected battery packs, the battery packs 10b and 10c have the same structure as the battery pack 10a.

**In** an embodiment, the battery pack 10a may be used as a first battery pack, and each of the battery packs 10b and 10c may be used as a second battery pack, that is, the battery management unit 32 of the battery pack 10a may be used as a first battery management unit, and the battery management unit 32 of each of the battery packs 10b and 10c may be used as a second battery management unit.

It may be understood that, in other embodiments, the battery pack 10b may alternatively be used as a first battery pack, and each of the battery packs 10a and 10c may be used as a second battery pack, that is, the battery management unit 32 of the battery pack 10b may be used as a first battery management unit, and the battery management unit 32 of each of the battery packs 10a and 10c may be used as a second battery management unit. Alternatively, the battery pack 10c is used as a first battery pack, and each of the battery packs 10a and 10b is used as a second battery pack, that is, the battery management unit 32 of the battery pack 10c is used as a first battery management unit, and the battery management unit 32 of each of the battery packs 10a and 10b is used as a second battery management unit. This is not specifically limited in the present application.

In an example, the battery pack 10a is the master, and the battery packs 10b and 10c are the slaves. The battery management unit 32 of the battery pack 10a may receive the state information transmitted by the battery management unit 32 of the battery pack 10b and the state information transmitted by the battery management unit 32 of the battery pack 10c. The battery management unit 32 of the battery pack 10a may further receive heating request information transmitted by the battery management unit 32 of the battery pack 10b and heating request information transmitted by the battery management unit 32 of the battery pack 10c. The state information of the battery pack 10b may include information such as a temperature, a voltage, and electric quantity of the battery pack 10b. The state information of the battery pack 10c may include information such as a temperature, a voltage, and electric quantity of the battery pack 10c.

The battery pack 10a may control heating of each battery pack based on the state information and the heating request information of the battery pack 10b and the state information and the heating request information of the battery pack 10c.

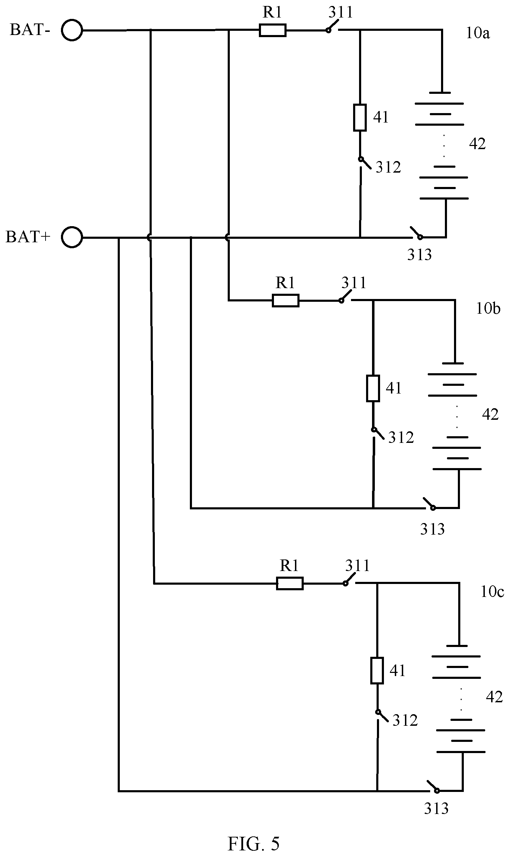

Referring to FIG. 5, the following describes in detail a working principle of the heating control system 100 for the parallel-connected battery packs in the present application with reference to a plurality of possible application scenarios.

In a first application scenario, the battery management unit 32 of the battery pack 10a collects state information and heating request information of the battery pack 10b and state information and heating request information of the battery pack 10c in real time. The battery pack 10a further aggregates the collected state information and the collected heating request information, and its own state information and heating request information, so as to determine a heating mode of each battery pack. In an example, the temperature of the battery pack 10a is -1 degree, a total voltage of the battery pack 10a is 100 V, and the battery pack 10a requests self-powered heating; the temperature of the battery pack 10b is -1 degree, a total voltage of the battery pack 10b is 101 V, and the battery pack 10b requests self-powered heating; and the temperature of the battery pack 10c is -1 degree, a total voltage of the battery pack 10c is 102 V, and the battery pack 10c requests self-powered heating. That is, the temperatures of the battery packs 10a, 10b, and 10c are all less than a first threshold (for example, 0 degrees), and the battery packs 10a, 10b, and 10c all request a self-powered heating mode. In this case, to prevent a circulating current from being generated between the parallel-connected battery packs, the battery pack 10a allows only the battery pack 10c with the highest total voltage to perform high-voltage activation. In other words, in response to the temperatures of the battery packs 10a, 10b, and 10c being all less than the first threshold, the battery management units 32 of the battery packs (that is, the battery management unit 32 of the battery pack 10a, the battery management unit 32 of the battery pack 10b, and the battery management unit 32 of the battery pack 10c) all requesting the self-powered heating, and the voltage of the battery pack 10c being the highest, the battery management unit 32 of the battery pack 10a is configured to: control the relay unit 31 of the battery pack 10c to enable the heating element 41 of the battery pack 10c and the battery unit 42 of the battery pack 10c to be electrically connected; control the relay unit 31 of the battery pack 10a to enable the heating element 41 of the battery pack 10a and the battery unit 42 of the battery pack 10c to be electrically connected; control the relay unit 31 of the battery pack 10a to enable the heating element 41 of the battery pack 10a and the battery unit 42 of the battery pack 10a to be electrically disconnected; control the relay unit 31 of the battery pack 10b to enable the heating element 41 of the battery pack 10b and the battery unit 42 of the battery pack 10c to be electrically connected; and control the relay unit 31 of the battery pack 10b to enable the heating element 41 of the battery pack 10b and the battery unit 42 of the battery pack 10b to be electrically disconnected.

More specifically, the battery management unit 32 of the battery pack 10a transmits a control instruction to the battery management unit 32 of the battery pack 10c by using the CAN bus. The battery management unit 32 of the battery pack 10c controls, according to the instruction, the relays 311 and 313 of the battery pack 10c to be turned on. The battery management unit 32 of the battery pack 10c further controls the relay 312 to be turned on, such that the battery pack 10c enters a heating state. In other words, the heating element 41 of the battery pack 10c is powered by the battery unit 42 of the battery pack 10c, such that the heating element 41 generates heat to heat the battery unit 42. In addition, the battery management unit 32 of the battery pack 10a further transmits an instruction to the battery management unit 32 of the battery pack 10b by using the CAN bus, such that the battery pack 10b enters an inverter-powered heating mode, and the battery pack 10a also enters the inverter-powered heating mode. Specifically, the battery management unit 32 of the battery pack 10b controls the relays 311 and 312 of the battery pack 10b to be turned on, and controls the relay 313 of the battery pack 10b to be turned off. The battery management unit 32 of the battery pack 10a controls the relays 311 and 312 of the battery pack 10a to be turned on, and controls the relay 313 of the battery pack 10a to be turned off. In this case, the heating element 41 of the battery pack 10a is powered by the battery pack 10c, and the heating element 41 of the battery pack 10b is also powered by the battery pack 10c.

It may be understood that each battery pack may determine, according to electric quantity of the battery pack, which heating mode to request. Specifically, if electric quantity of a battery pack is greater than or equal to a preset threshold, the battery pack may request the self-powered heating mode. If electric quantity of a battery pack is less than a preset threshold, the battery pack may request the inverter-powered heating mode. For example, if electric quantity of the battery pack 10b is greater than or equal to the preset threshold, the battery pack 10b may request the self-powered heating mode. If the electric quantity of the battery pack 10b is less than the preset threshold, the battery pack 10b may request the inverter-powered heating mode.

It may be understood that the self-powered heating mode mentioned in this specification means that the heating element 41 of a battery pack is powered by the battery unit 42 of the battery pack to heat the battery pack. The inverter-powered heating mode mentioned in this specification means that the heating element 41 of a battery pack is powered by the inverter 20 or another one of the parallel-connected battery packs to heat the battery pack.

In other words, in the foregoing first application scenario, when the temperatures of the battery packs 10a, 10b, and 10c are all less than the first threshold, the heating control system 100 for the parallel-connected battery packs allows only one battery pack to operate in the self-powered heating. If the battery packs 10a, 10b, and 10c all request the self-powered heating, the battery pack 10a (that is, the master) may allow only the battery pack that completes the high-voltage activation to enter the self-powered heating mode. The battery pack 10a (that is, the master) issues the instruction to other battery packs that request the self-powered heating, to control these battery packs to enter the inverter-powered heating mode, with the heating powered by the battery pack having the highest total voltage. Based on such a design, damage caused by a charging-induced circulating current between battery packs may be avoided when the temperatures of the battery packs are less than the first threshold.

In a second application scenario, initial temperatures of the battery packs 10a, 10b, and 10c are all -1 degree, and the total voltage of the battery pack 10c is the highest. In response to the instructions from the battery pack 10a, the relays 311, 313, and 312 of the battery pack 10c are all turned on; the relays 311 and 312 of the battery pack 10b are turned on, and the relay 313 of the battery pack 10b is turned off; and the relays 311 and 312 of the battery pack 10a are turned on, and the relay 313 of the battery pack 10a is turned off. In this case, the battery packs 10a, 10b, and 10c all enter a heating state, and the temperatures of the battery packs 10a, 10b, and 10c all start to increase. If the temperature of the battery pack 10a is 1.1 degrees and the total voltage of the battery pack 10a is 100 V, the temperature of the battery pack 10b is 0.5 degrees and the total voltage of the battery pack 10b is 101 V, and the temperature of the battery pack 10c is 2 degrees and the total voltage of the battery pack 10c is 102 V, the temperature of the battery pack 10a may meet a high-voltage activation condition, and therefore, the battery pack 10a controls the relay 313 to be turned on.

In this scenario, in response to both the temperature of the battery unit 42 of the battery pack 10a and the temperature of the battery unit 42 of the battery pack 10c being greater than or equal to a second threshold, and each of the battery pack 10a, the battery pack 10b, and the battery pack 10c requesting the self-powered heating, the battery management unit 32 of the battery pack 10a is configured to: control the relay unit 31 of the battery pack 10a to enable the heating element 41 of the battery pack 10a and the battery unit 42 of the battery pack 10a to be electrically connected; control the relay unit 31 of the battery pack 10c to enable the heating element 41 of the battery pack 10c and the battery unit 42 of the battery pack 10c to be electrically connected; control the relay unit 31 of the battery pack 10b to enable the heating element 41 of the battery pack 10b and the battery unit 42 of the battery pack 10a to be electrically connected, and control the relay unit 31 of the battery pack 10b to enable the heating element 41 of the battery pack 10b and the battery unit 42 of the battery pack 10c to be electrically connected; and control the relay unit 31 of the battery pack 10b to enable the heating element 41 of the battery pack 10b and the battery unit 42 of the battery pack 10b to be electrically disconnected.

More specifically, the battery management unit 32 of the battery pack 10a controls the relays 311, 312, and 313 of the battery pack 10a to be all turned on, and controls the relays 311, 312, and 313 of the battery pack 10c to be all turned on, such that the battery pack 10a and the battery pack 10c enter the self-powered heating mode; and controls the relays 311 and 312 of the battery pack 10b to be turned on, and controls the relay 313 of the battery pack 10b to be turned off, such that the battery pack 10b enters the inverter-powered heating mode.

In other words, in the foregoing second application scenario, when the temperature of a battery pack is greater than the first threshold, the battery pack may be charged. When the temperature of a battery pack in the heating control system 100 for the parallel-connected battery packs is greater than or equal to a second threshold (for example, 1 degree), the battery pack whose temperature is greater than the second threshold may supply power to the heating element 41 in another battery pack.

In a third application scenario, the temperatures of the battery packs 10a, 10b, and 10c are all less than the first threshold (for example, 0 degrees), and each of the battery packs 10a, 10b, and 10c determines, based on electric quantity of the battery pack, which heating mode to request. If the battery pack 10a requests self-powered heating, the battery pack 10b requests inverter-powered heating, and the battery pack 10c requests self-powered heating, in this case, in response to the temperatures of the battery packs 10a, 10b, and 10c being all less than the first threshold, and any one of the battery management units of the battery packs (that is, the battery management unit 32 of the battery pack 10a, the battery management unit 32 of the battery pack 10b, and the battery management unit 32 of the battery pack 10c) requesting the inverter-powered heating, the battery management unit 32 of the battery pack 10a is configured to: control the relay unit 31 of the battery pack 10a to enable the heating element 41 of the battery pack 10a and the inverter 20 to be electrically connected, and control the relay unit 31 of the battery pack 10a to enable the heating element 41 of the battery pack 10a and the battery unit 42 of the battery pack 10a to be electrically disconnected; control the relay unit 31 of the battery pack 10b to enable the heating element 41 of the battery pack 10b and the inverter 20 to be electrically connected, and control the relay unit 31 of the battery pack 10b to enable the heating element 41 of the battery pack 10b and the battery unit 42 of the battery pack 10b to be electrically disconnected; and control the relay unit 31 of the battery pack 10c to enable the heating element 41 of the battery pack 10c and the inverter 20 to be electrically connected, and control the relay unit 31 of the battery pack 10c to enable the heating element 41 of the battery pack 10c and the battery unit 42 of the battery pack 10c to be electrically disconnected. More specifically, the battery management unit 32 of the battery pack 10a transmits a control instruction to the battery management unit 32 of the battery pack 10b and the battery management unit 32 of the battery pack 10c by using the CAN bus, such that the battery packs 10a, 10b, and 10c all enter the inverter-powered heating mode. That is to say, in response to the control instruction issued by the battery management unit 32 of the battery pack 10a, the relays 311 and 312 of the battery pack 10a are turned on and the relay 313 of the battery pack 10a is turned off; the relays 311 and 312 of the battery pack 10b are turned on and the relay 313 of the battery pack 10b is turned off; and the relays 311 and 312 of the battery pack 10c are turned on and the relay 313 of the battery pack 10c is turned off.

In other words, in the foregoing third application scenario, in all of the battery packs that currently request to be heated, if there is a battery pack that requests the inverter-powered heating mode, the battery pack 10a (that is, the master) issues the instruction to all of the battery packs that request to be heated, to instruct all of the battery packs to enter the inverter-powered heating mode.

It may be understood that, in the heating control system 100 for the parallel-connected battery packs in the present application, when a battery pack is in the inverter-powered heating mode, the battery management unit 32 of the battery pack may detect, by using the first terminal BAT+ and the second terminal BAT-, that an external power supply voltage exists, and the battery management unit 32 of the battery pack may detect that there is no current at the current sensor R1. In this case, the battery management unit 32 of the battery pack may determine that an open circuit fault occurs in the heating circuit, so that the relay unit 31 of the battery pack may be correspondingly controlled.

In a fourth application scenario, if the battery packs 10a, 10b, and 10c are all in the inverter-powered heating mode, when the temperature of the battery pack 10a increases to 3 degrees, the temperature of the battery pack 10b increases to 2 degrees, and the temperature of the battery pack 10c increases to 4 degrees, that is, a minimum temperature of the battery packs in the heating control system 100 for the parallel-connected battery packs has reached 2 degrees, the battery pack 10a issues a control instruction, and the battery packs 10a, 10b, and 10c all exit the inverter-powered heating mode. In other words, in response to a minimum of the temperature of the battery unit 42 of the battery pack 10a, the temperature of the battery unit 42 of the battery pack 10b, and the temperature of the battery unit 42 of the battery pack 10c being greater than or equal to a third threshold, the battery management unit 32 of the battery pack 10a is configured to: control the relay unit 31 of the battery pack 10a to enable the heating element 41 of the battery pack 10a and the battery unit 42 of the battery pack 10a to be electrically connected; control the relay unit 31 of the battery pack 10b to enable the heating element 41 of the battery pack 10b and the battery unit 42 of the battery pack 10b to be electrically connected; and control the relay unit 31 of the battery pack 10c to enable the heating element 41 of the battery pack 10c and the battery unit 42 of the battery pack 10c to be electrically connected. More specifically, the battery management unit 32 of the battery pack 10a transmits the control instruction to the battery management unit 32 of the battery pack 10b and the battery management unit 32 of the battery pack 10c by using the CAN bus, such that the battery management unit 32 of the battery pack 10a controls the relays 311 and 312 of the battery pack 10a to be turned off; controls the relays 311 and 312 of the battery pack 10b to be turned off; and controls the relays 311 and 312 of the battery pack 10c to be turned off. Then, the battery packs 10a, 10b, and 10c all switch to the self-powered heating mode, that is, the relays 311 and 313 of the battery pack 10a are controlled to be turned on, the relays 311 and 313 of the battery pack 10b are controlled to be turned on; and the relays 311 and 313 of the battery pack 10c are controlled to be turned on. Next, the relay 312 of the battery pack 10a is controlled to be turned on; the relay 312 of the battery pack 10b is controlled to be turned on; and the relay 312 of the battery pack 10c is controlled to be turned on.

In other words, in the foregoing fourth application scenario, when all the battery packs enter the inverter-powered heating mode, and a minimum temperature of the parallel-connected battery packs increases to reach a third threshold (for example, 2 degrees), in this case, since the battery cells of the battery packs can be charged and discharged, the battery pack 10a (that is, the master) issues the instruction to the battery packs that request to be heated, so as to control all of the battery packs that request to be heated to switch to the self-powered heating mode.

In a fifth application scenario, where the temperature of the battery pack 10a is 9 degrees, the temperature of the battery pack 10b is 8 degrees, and the temperature of the battery pack 10c is 10 degrees.

In other words, in response to the temperature of the battery unit 42 of the battery pack 10a being greater than or equal to a fourth threshold, the battery management unit 32 of the battery pack 10a is configured to: control the relay unit 31 of the battery pack 10a to enable the heating element 41 of the battery pack 10a and the battery unit 42 of the battery pack 10a to be electrically disconnected; and control the relay unit 31 of the battery pack 10a to enable the heating element 41 of the battery pack 10a and the battery unit 42 of the battery pack 10b to be electrically disconnected, or enable the heating element 41 of the battery pack 10a and the battery unit 42 of the battery pack 10c to be electrically disconnected.

In response to the temperature of the battery unit 42 of the battery pack 10b being greater than or equal to a fourth threshold, the battery management unit 32 of the battery pack 10a is configured to: control the relay unit 31 of the battery pack 10b to enable the heating element 41 of the battery pack 10b and the battery unit 42 of the battery pack 10b to be electrically disconnected; and control the relay unit 31 of the battery pack 10b to enable the heating element 41 of the battery pack 10b and the battery unit 42 of the battery pack 10a to be electrically disconnected, or enable the heating element 41 of the battery pack 10b and the battery unit 42 of the battery pack 10c to be electrically disconnected.

In response to the temperature of the battery unit 42 of the battery pack 10c being greater than or equal to a fourth threshold, the battery management unit 32 of the battery pack 10a is configured to: control the relay unit 31 of the battery pack 10c to enable the heating element 41 of the battery pack 10c and the battery unit 42 of the battery pack 10c to be electrically disconnected; and control the relay unit 31 of the battery pack 10c to enable the heating element 41 of the battery pack 10c and the battery unit 42 of the battery pack 10a to be electrically disconnected, or enable the heating element 41 of the battery pack 10c and the battery unit 42 of the battery pack 10b to be electrically disconnected.

More specifically, in response to the temperature of the battery unit 42 of the battery pack 10c increasing to 10 degrees, the battery management unit 32 of the battery pack 10a transmits a control instruction to the battery management unit 32 of the battery pack 10c by using the CAN bus, to control the battery pack 10c to exit heating. The battery management unit 32 of the battery pack 10c controls the relay 312 of the battery pack 10c to be turned off.

In response to the temperature of the battery unit 42 of the battery pack 10a increasing to 10 degrees, the battery pack 10a exits heating, that is, the battery management unit 32 of the battery pack 10a controls the relay 312 of the battery pack 10a to be turned off. In response to the temperature of the battery unit 42 of the battery pack 10b increasing to 10 degrees, the battery management unit 32 of the battery pack 10a transmits a control instruction to the battery management unit 32 of the battery pack 10b by using the CAN bus, to control the battery pack 10b to exit heating, that is, the battery management unit 32 of the battery pack 10b controls the relay 312 of the battery pack 10b to be turned off.

In other words, in the foregoing fifth application scenario, if the temperature of any one of the battery packs 10a, 10b, or 10c reaches a fourth threshold (for example, 10 degrees), the battery pack 10a (that is, the master) controls the battery pack to exit heating.

According to the heating control system for the parallel-connected battery packs in the present application, state information and heating request information of the parallel-connected battery packs are aggregated by the first battery pack, and the heating modes of the battery packs are controlled by the first battery pack based on the aggregated state information and the aggregated heating request information, such that only one battery pack of the parallel-connected battery packs is allowed to operate in the self-powered heating under a low-temperature condition, thereby resolving a charging problem due to a circulating current between the battery packs under a low-temperature condition.

## Claims

1. A heating control system (100) for parallel-connected battery packs, comprising a first battery pack (10a) and at least one second battery pack (10b, 10c) that are connected in parallel,
wherein the first battery pack (10a) comprises a first relay unit (31), a first battery unit (42), a first heating element (41), and a first battery management unit (32);
each of the at least one second battery pack (10b, 10c) comprises a second relay unit, a second battery unit, a second heating element, and a second battery management unit;
the first relay unit (31) is configured to enable the first battery unit (42) and the first heating element (41) to be electrically connected or disconnected, and the first relay unit (31) is further configured to enable the first heating element (41) and an inverter (20) to be electrically connected or disconnected, or enable the first heating element (41) and the second battery unit to be electrically connected or disconnected;
the second relay unit is configured to enable the second battery unit and the second heating element to be electrically connected or disconnected, and the second relay unit is further configured to enable the second heating element and the inverter (20) to be electrically connected or disconnected, or enable the second heating element and the first battery unit (42) to be electrically connected or disconnected; and
in response to both a temperature of the first battery unit (42) and a temperature of the second battery unit being less than a first threshold, each of the first battery management unit (32) and the second battery management unit issuing a first heating request, and a voltage of the second battery unit being greater than a voltage of the first battery unit (42), the first battery management unit (32) is configured to:
control the second relay unit to enable the second heating element and the second battery unit to be electrically connected;
control the first relay unit (31) to enable the first heating element (41) and the second battery unit to be electrically connected; and
control the first relay unit (31) to enable the first heating element (41) and the first battery unit (42) to be electrically disconnected,
wherein the first heating request indicates a request for self-powered heating.

2. The heating control system (100) for the parallel-connected battery packs according to claim 1, wherein in response to the temperature of the first battery unit (42) being greater than or equal to a second threshold, and each of the first battery management unit (32) and the second battery management unit issuing the first heating request, the first battery management unit (32) is configured to:
control the first relay unit (31) to enable the first heating element (41) and the first battery unit (42) to be electrically connected;
control the second relay unit to enable the second heating element and the first battery unit (42) to be electrically connected; and
control the second relay unit to enable the second heating element and the second battery unit to be electrically disconnected,
wherein the second threshold is greater than the first threshold.

3. The heating control system (100) for the parallel-connected battery packs according to claim 1, wherein in response to both the temperature of the first battery unit (42) and the temperature of the second battery unit being less than the first threshold, and either of the first battery management unit (32) and the second battery management unit issuing a second heating request, the first battery management unit (32) is configured to:
control the first relay unit (31) to enable the first heating element (41) and the inverter (20) to be electrically connected, and control the first relay unit (31) to enable the first heating element (41) and the first battery unit (42) to be electrically disconnected; and
control the second relay unit to enable the second heating element and the inverter (20) to be electrically connected, and control the second relay unit to enable the second heating element and the second battery unit to be electrically disconnected,
wherein the second heating request indicates a request for inverter-powered heating.

4. The heating control system (100) for the parallel-connected battery packs according to claim 3, wherein in response to a minimum of the temperature of the first battery unit (42) and the temperature of the second battery unit being greater than or equal to a third threshold, the first battery management unit (32) is configured to:
control the first relay unit (31) to enable the first heating element (41) and the first battery unit (42) to be electrically connected; and
control the second relay unit to enable the second heating element and the second battery unit to be electrically connected.

5. The heating control system (100) for the parallel-connected battery packs according to claim 1, wherein in response to the temperature of the first battery unit (42) being greater than or equal to a fourth threshold, the first battery management unit (32) is configured to:
control the first relay unit (31) to enable the first heating element (41) and the second battery unit to be electrically disconnected.

6. The heating control system (100) for the parallel-connected battery packs according to claim 1, wherein in response to the temperature of the second battery unit being greater than or equal to a fourth threshold, the first battery management unit (32) is configured to:
control the second relay unit to enable the second heating element and the second battery unit to be electrically disconnected.

7. The heating control system (100) for the parallel-connected battery packs according to claim 1, wherein the first relay unit (31) comprises a first relay (311), a second relay (312), and a third relay (313), and the second relay unit comprises a fourth relay, a fifth relay, and a sixth relay;
the first relay (311) is electrically connected between a first end of the inverter (20) and a negative electrode of the first battery unit (42), the first relay (311) is further electrically connected between the first end of the inverter (20) and a first end of the first heating element (41), the second relay (312) is electrically connected between a second end of the inverter (20) and a second end of the first heating element (41), and the third relay (313) is electrically connected between the second end of the inverter (20) and a positive electrode of the first battery unit (42); and
the fourth relay is electrically connected between the first end of the inverter (20) and a negative electrode of the second battery unit, the fourth relay is further electrically connected between the first end of the inverter (20) and a first end of the second heating element, the fifth relay is electrically connected between the second end of the inverter (20) and a second end of the second heating element, and the sixth relay is electrically connected between the second end of the inverter (20) and a positive electrode of the second battery unit.

8. The heating control system (100) for the parallel-connected battery packs according to claim 7, wherein in response to both the temperature of the first battery unit (42) and the temperature of the second battery unit being less than the first threshold, each of the first battery management unit (32) and the second battery management unit issuing the first heating request, and the voltage of the second battery unit being greater than the voltage of the first battery unit (42), the first battery management unit (32) is configured to:
control the fourth relay, the fifth relay, and the sixth relay to be all turned on; and
control both the first relay (311) and the second relay (312) to be turned on, and control the third relay (313) to be turned off.

9. The heating control system (100) for the parallel-connected battery packs according to claim 8, wherein in response to the temperature of the first battery unit (42) being greater than or equal to a second threshold, the first battery management unit (32) is configured to:
control the first relay (311), the second relay (312), and the third relay (313) to be all turned on,
wherein the second threshold is greater than the first threshold.

10. The heating control system (100) for the parallel-connected battery packs according to claim 7, wherein in response to both the temperature of the first battery unit (42) and the temperature of the second battery unit being less than the first threshold, and either of the first battery management unit (32) and the second battery management unit issuing a second heating request, the first battery management unit (32) is configured to:
control both the first relay (311) and the second relay (312) to be turned on, and control the third relay (313) to be turned off; and
control both the fourth relay and the fifth relay to be turned on, and control the sixth relay to be turned off,
wherein the second heating request indicates a request for inverter-powered heating.

11. The heating control system (100) for the parallel-connected battery packs according to claim 10, wherein in response to a minimum of the temperature of the first battery unit (42) and the temperature of the second battery unit being greater than or equal to a third threshold, the first battery management unit (32) is configured to:
control the first relay (311), the second relay (312), and the third relay (313) to be all turned on; and
control the fourth relay, the fifth relay, and the sixth relay to be all turned on.

12. The heating control system (100) for the parallel-connected battery packs according to claim 7, wherein in response to the temperature of the first battery unit 42) being greater than or equal to a fourth threshold, the first battery management unit (32) is configured to:
control both the first relay (311) and the third relay (313) to be turned on, and control the second relay (312) to be turned off.

13. The heating control system (100) for the parallel-connected battery packs according to claim 7, wherein in response to the temperature of the second battery unit being greater than or equal to a fourth threshold, the first battery management unit (32) is configured to:
control both the fourth relay and the sixth relay to be turned on, and control the fifth relay to be turned off.

## Patentansprüche

1. Heizsteuerungssystem (100) für parallel geschaltete Batteriepacks, umfassend ein erstes Batteriepack (10a) und mindestens ein zweites Batteriepack (10b, 10c), die parallel geschaltet sind,
wobei das erste Batteriepack (10a) eine erste Relaiseinheit (31), eine erste Batterieeinheit (42), ein erstes Heizelement (41) und eine erste Batterieverwaltungseinheit (32) umfasst;
das mindestens eine zweite Batteriepack (10b, 10c) eine zweite Relaiseinheit, eine zweite Batterieeinheit, ein zweites Heizelement und eine zweite Batterieverwaltungseinheit umfasst;
die erste Relaiseinheit (31) dazu eingerichtet ist, zu ermöglichen, dass die erste Batterieeinheit (42) und das erste Heizelement (41) elektrisch verbunden oder voneinander getrennt werden, und die erste Relaiseinheit (31) ferner dazu eingerichtet ist, zu ermöglichen, dass das erste Heizelement (41) und ein Wechselrichter (20) elektrisch verbunden oder voneinander getrennt werden, oder zu ermöglichen, dass das erste Heizelement (41) und die zweite Batterieeinheit elektrisch verbunden oder voneinander getrennt werden;
die zweite Relaiseinheit dazu eingerichtet ist, zu ermöglichen, dass die zweite Batterieeinheit und das zweite Heizelement elektrisch verbunden oder voneinander getrennt werden, und die zweite Relaiseinheit ferner dazu eingerichtet ist, zu ermöglichen, dass das zweite Heizelement und der Wechselrichter (20) elektrisch verbunden oder voneinander getrennt werden, oder zu ermöglichen, dass das zweite Heizelement und die erste Batterieeinheit (42) elektrisch verbunden oder voneinander getrennt werden; und
wobei als Reaktion darauf, dass sowohl eine Temperatur der ersten Batterieeinheit (42) als auch eine Temperatur der zweiten Batterieeinheit geringer als ein erster Schwellenwert sind, sowohl die erste Batterieverwaltungseinheit (32) als auch die zweite Batterieverwaltungseinheit jeweils eine erste Heizanforderung ausgeben und eine Spannung der zweiten Batterieeinheit größer als eine Spannung der ersten Batterieeinheit (42) ist, die erste Batterieverwaltungseinheit (32) zu Folgendem eingerichtet ist:
Steuern der zweiten Relaiseinheit, um zu ermöglichen, dass das zweite Heizelement und die zweite Batterieeinheit elektrisch verbunden werden;
Steuern der ersten Relaiseinheit (31), um zu ermöglichen, dass das erste Heizelement (41) und die zweite Batterieeinheit elektrisch verbunden werden; und
Steuern der ersten Relaiseinheit (31), um zu ermöglichen, dass das erste Heizelement (41) und die erste Batterieeinheit (42) elektrisch voneinander getrennt werden,
wobei die erste Heizanforderung eine Anforderung für eine selbstversorgende Heizung angibt.

2. Heizsteuerungssystem (100) für die parallel geschalteten Batteriepacks nach Anspruch 1, wobei als Reaktion darauf, dass die Temperatur der ersten Batterieeinheit (42) größer als oder gleich einem zweiten Schwellenwert ist und sowohl die erste Batterieverwaltungseinheit (32) als auch die zweite Batterieverwaltungseinheit jeweils die erste Heizanforderung ausgeben, die erste Batterieverwaltungseinheit (32) zu Folgendem eingerichtet ist:
Steuern der ersten Relaiseinheit (31), um zu ermöglichen, dass das erste Heizelement (41) und die erste Batterieeinheit (42) elektrisch verbunden werden;
Steuern der zweiten Relaiseinheit, um zu ermöglichen, dass das zweite Heizelement und die erste Batterieeinheit (42) elektrisch verbunden werden; und
Steuern der zweiten Relaiseinheit, um zu ermöglichen, dass das zweite Heizelement und die zweite Batterieeinheit elektrisch voneinander getrennt werden,
wobei der zweite Schwellenwert größer als der erste Schwellenwert ist.

3. Heizsteuerungssystem (100) für die parallel geschalteten Batteriepacks nach Anspruch 1, wobei als Reaktion darauf, dass sowohl die Temperatur der ersten Batterieeinheit (42) als auch die Temperatur der zweiten Batterieeinheit geringer als der erste Schwellenwert sind und eine der ersten Batterieverwaltungseinheit (32) und der zweiten Batterieverwaltungseinheit eine zweite Heizanforderung ausgibt, die erste Batterieverwaltungseinheit (32) zu Folgendem eingerichtet ist:
Steuern der ersten Relaiseinheit (31), um zu ermöglichen, dass das erste Heizelement (41) und der Wechselrichter (20) elektrisch verbunden werden, und Steuern der ersten Relaiseinheit (31), um zu ermöglichen, dass das erste Heizelement (41) und die erste Batterieeinheit (42) elektrisch voneinander getrennt werden; und
Steuern der zweiten Relaiseinheit, um zu ermöglichen, dass das zweite Heizelement und der Wechselrichter (20) elektrisch verbunden werden, und Steuern der zweiten Relaiseinheit, um zu ermöglichen, dass das zweite Heizelement und die zweite Batterieeinheit elektrisch voneinander getrennt werden,
wobei die zweite Heizanforderung eine Anforderung für eine durch den Wechselrichter angetriebene Heizung angibt.

4. Heizsteuerungssystem (100) für die parallel geschalteten Batteriepacks nach Anspruch 3, wobei als Reaktion darauf, dass das Minimum aus der Temperatur der ersten Batterieeinheit (42) und der Temperatur der zweiten Batterieeinheit größer als oder gleich einem dritten Schwellenwert ist, die erste Batterieverwaltungseinheit (32) zu Folgendem eingerichtet ist:
Steuern der ersten Relaiseinheit (31), um zu ermöglichen, dass das erste Heizelement (41) und die erste Batterieeinheit (42) elektrisch verbunden werden; und
Steuern der zweiten Relaiseinheit, um zu ermöglichen, dass das zweite Heizelement und die zweite Batterieeinheit elektrisch verbunden werden.

5. Heizsteuerungssystem (100) für die parallel geschalteten Batteriepacks nach Anspruch 1, wobei als Reaktion darauf, dass die Temperatur der ersten Batterieeinheit (42) größer als oder gleich einem vierten Schwellenwert ist, die erste Batterieverwaltungseinheit (32) zu Folgendem eingerichtet ist:
Steuern der ersten Relaiseinheit (31), um zu ermöglichen, dass das erste Heizelement (41) und die zweite Batterieeinheit elektrisch voneinander getrennt werden.

6. Heizsteuerungssystem (100) für die parallel geschalteten Batteriepacks nach Anspruch 1, wobei als Reaktion darauf, dass die Temperatur der zweiten Batterieeinheit größer als oder gleich einem vierten Schwellenwert ist, die erste Batterieverwaltungseinheit (32) zu Folgendem eingerichtet ist:
Steuern der zweiten Relaiseinheit, um zu ermöglichen, dass das zweite Heizelement und die zweite Batterieeinheit elektrisch voneinander getrennt werden.

7. Heizsteuerungssystem (100) für die parallel geschalteten Batteriepacks nach Anspruch 1, wobei die erste Relaiseinheit (31) ein erstes Relais (311), ein zweites Relais (312) und ein drittes Relais (313) umfasst und die zweite Relaiseinheit ein viertes Relais, ein fünftes Relais und ein sechstes Relais umfasst;
das erste Relais (311) elektrisch zwischen einem ersten Ende des Wechselrichters (20) und einer negativen Elektrode der ersten Batterieeinheit (42) verbunden ist, das erste Relais (311) ferner elektrisch zwischen dem ersten Ende des Wechselrichters (20) und einem ersten Ende des ersten Heizelements (41) verbunden ist, das zweite Relais (312) elektrisch zwischen einem zweiten Ende des Wechselrichters (20) und einem zweiten Ende des ersten Heizelements (41) verbunden ist, und das dritte Relais (313) elektrisch zwischen dem zweiten Ende des Wechselrichters (20) und einer positiven Elektrode der ersten Batterieeinheit (42) verbunden ist; und
das vierte Relais elektrisch zwischen dem ersten Ende des Wechselrichters (20) und einer negativen Elektrode der zweiten Batterieeinheit verbunden ist, das vierte Relais ferner elektrisch zwischen dem ersten Ende des Wechselrichters (20) und einem ersten Ende des zweiten Heizelements verbunden ist, das fünfte Relais elektrisch zwischen dem zweiten Ende des Wechselrichters (20) und einem zweiten Ende des zweiten Heizelements verbunden ist, und das sechste Relais elektrisch zwischen dem zweiten Ende des Wechselrichters (20) und einer positiven Elektrode der zweiten Batterieeinheit verbunden ist.

8. Heizsteuerungssystem (100) für die parallel geschalteten Batteriepacks nach Anspruch 7, wobei als Reaktion darauf, dass sowohl die Temperatur der ersten Batterieeinheit (42) als auch die Temperatur der zweiten Batterieeinheit geringer als der erste Schwellenwert sind, sowohl die erste Batterieverwaltungseinheit (32) als auch die zweite Batterieverwaltungseinheit jeweils die erste Heizanforderung ausgeben und die Spannung der zweiten Batterieeinheit größer als die Spannung der ersten Batterieeinheit (42) ist, die erste Batterieverwaltungseinheit (32) zu Folgendem eingerichtet ist:
Steuern des vierten Relais, des fünften Relais und des sechsten Relais, so dass alle eingeschaltet werden; und
Steuern sowohl des ersten Relais (311) als auch des zweiten Relais (312), so dass sie eingeschaltet werden, und Steuern des dritten Relais (313), so dass es ausgeschaltet wird.

9. Heizsteuerungssystem (100) für die parallel geschalteten Batteriepacks nach Anspruch 8, wobei als Reaktion darauf, dass die Temperatur der ersten Batterieeinheit (42) größer als oder gleich einem zweiten Schwellenwert ist, die erste Batterieverwaltungseinheit (32) zu Folgendem eingerichtet ist:
Steuern des ersten Relais (311), des zweiten Relais (312) und des dritten Relais (313), so dass alle eingeschaltet werden,
wobei der zweite Schwellenwert größer als der erste Schwellenwert ist.

10. Heizsteuerungssystem (100) für die parallel geschalteten Batteriepacks nach Anspruch 7, wobei als Reaktion darauf, dass sowohl die Temperatur der ersten Batterieeinheit (42) als auch die Temperatur der zweiten Batterieeinheit geringer als der erste Schwellenwert sind und eine der ersten Batterieverwaltungseinheit (32) und der zweiten Batterieverwaltungseinheit eine zweite Heizanforderung ausgibt, die erste Batterieverwaltungseinheit (32) zu Folgendem eingerichtet ist:
Steuern sowohl des ersten Relais (311) als auch des zweiten Relais (312), so dass sie eingeschaltet werden, und Steuern des dritten Relais (313), so dass es ausgeschaltet wird; und
Steuern sowohl des vierten Relais als auch des fünften Relais, so dass sie eingeschaltet werden, und Steuern des sechsten Relais, so dass es ausgeschaltet wird,
wobei die zweite Heizanforderung eine Anforderung für eine durch den Wechselrichter angetriebene Heizung angibt.

11. Heizsteuerungssystem (100) für die parallel geschalteten Batteriepacks nach Anspruch 10, wobei als Reaktion darauf, dass das Minimum aus der Temperatur der ersten Batterieeinheit (42) und der Temperatur der zweiten Batterieeinheit größer als oder gleich einem dritten Schwellenwert ist, die erste Batterieverwaltungseinheit (32) zu Folgendem eingerichtet ist:
Steuern des ersten Relais (311), des zweiten Relais (312) und des dritten Relais (313), so dass alle eingeschaltet werden; und
Steuern des vierten Relais, des fünften Relais und des sechsten Relais, so dass alle eingeschaltet werden.

12. Heizsteuerungssystem (100) für die parallel geschalteten Batteriepacks nach Anspruch 7, wobei als Reaktion darauf, dass die Temperatur der ersten Batterieeinheit (42) größer als oder gleich einem vierten Schwellenwert ist, die erste Batterieverwaltungseinheit (32) zu Folgendem eingerichtet ist:
Steuern sowohl des ersten Relais (311) als auch des dritten Relais (313), so dass sie eingeschaltet werden, und Steuern des zweiten Relais (312), so dass es ausgeschaltet wird.

13. Heizsteuerungssystem (100) für die parallel geschalteten Batteriepacks nach Anspruch 7, wobei als Reaktion darauf, dass die Temperatur der zweiten Batterieeinheit größer als oder gleich einem vierten Schwellenwert ist, die erste Batterieverwaltungseinheit (32) zu Folgendem eingerichtet ist:
Steuern sowohl des vierten Relais als auch des sechsten Relais, so dass sie eingeschaltet werden, und Steuern des fünften Relais, so dass es ausgeschaltet wird.

## Revendications

1. Système de commande de chauffage (100) pour blocs-batteries branchés en parallèle, comprenant un premier bloc-batterie (10a) et au moins un second bloc-batterie (10b, 10c) qui sont branchés en parallèle,
dans lequel le premier bloc-batterie (10a) comprend une première unité de relais (31), une première unité de batterie (42), un premier élément chauffant (41) et une première unité de gestion de batterie (32) ;
chacun dudit au moins un second bloc-batterie (10b, 10c) comprend une seconde unité de relais, une seconde unité de batterie, un second élément chauffant et une seconde unité de gestion de batterie ;
la première unité de relais (31) est configurée pour permettre à la première unité de batterie (42) et au premier élément chauffant (41) d'être électriquement connectés ou déconnectés, et la première unité de relais (31) est en outre configurée pour permettre au premier élément chauffant (41) et à un onduleur (20) d'être électriquement connectés ou déconnectés, ou pour permettre au premier élément chauffant (41) et à la seconde unité de batterie d'être électriquement connectés ou déconnectés ;
la seconde unité de relais est configurée pour permettre la connexion ou la déconnexion électrique entre la seconde unité de batterie et le second élément chauffant, et la seconde unité de relais est en outre configurée pour permettre la connexion ou la déconnexion électrique entre le second élément chauffant et l'onduleur (20) ou pour permettre la connexion ou la déconnexion électrique entre le second élément chauffant et la première unité de batterie (42) ; et
en réponse à une température de la première unité de batterie (42) et à une température de la seconde unité de batterie toutes deux inférieures à un premier seuil, chacune de la première unité de gestion de batterie (32) et de la seconde unité de gestion de batterie émettant une première demande de chauffage, et une tension de la seconde unité de batterie étant supérieure à une tension de la première unité de batterie (42), la première unité de gestion de batterie (32) est configurée :
pour amener la seconde unité de relais à permettre la connexion électrique entre le second élément chauffant et la seconde unité de batterie ;
pour amener la première unité de relais (31) à permettre la connexion électrique entre le premier élément chauffant (41) et la seconde unité de batterie ; et
pour amener la première unité de relais (31) à permettre la déconnexion électrique du premier élément chauffant (41) et de la première unité de batterie (42),
dans lequel la première demande de chauffage indique une demande de chauffage autonome.

2. Système de commande de chauffage (100) pour les blocs-batteries branchés en parallèle selon la revendication 1, dans lequel en réponse à la température de la première unité de batterie (42) étant supérieure ou égale à un deuxième seuil, et chacune de la première unité de gestion de batterie (32) et de la seconde unité de gestion de batterie émettant la première demande de chauffage, la première unité de gestion de batterie (32) est configurée :
pour amener la première unité de relais (31) à permettre la connexion électrique du premier élément chauffant (41) et de la première unité de batterie (42) ;
pour amener la seconde unité de relais à permettre la connexion électrique du second élément chauffant et de la première unité de batterie (42) ; et
pour amener la seconde unité de relais à permettre la déconnexion électrique du second élément chauffant et de la seconde unité de batterie,
dans lequel le deuxième seuil est supérieur au premier seuil.

3. Système de commande de chauffage (100) pour les blocs-batteries branchés en parallèle selon la revendication 1, dans lequel en réponse à la température de la première unité de batterie (42) et la température de la seconde unité de batterie étant inférieures au premier seuil, et l'une ou l'autre de la première unité de gestion de batterie (32) et de la seconde unité de gestion de batterie émettant une seconde demande de chauffage, la première unité de gestion de batterie (32) est configurée :
pour amener la première unité de relais (31) à permettre la connexion électrique du premier élément chauffant (41) et de l'onduleur (20) et pour amener la première unité de relais (31) à permettre la déconnexion électrique du premier élément chauffant (41) et de la première unité de batterie (42) ; et
pour amener la seconde unité de relais à permettre la connexion électrique du second élément chauffant et de l'onduleur (20) et pour amener la seconde unité de relais à permettre la déconnexion électrique du second élément chauffant et de la seconde unité de batterie,
dans lequel la seconde demande de chauffage indique une demande de chauffage alimenté par onduleur.

4. Système de commande de chauffage (100) pour les blocs-batteries branchés en parallèle selon la revendication 3, dans lequel en réponse au fait que la valeur minimale de la température de la première unité de batterie (42) et de la température de la seconde unité de batterie est supérieure ou égale à un troisième seuil, la première unité de gestion de batterie (32) est configurée :
pour amener la première unité de relais (31) à permettre la connexion électrique du premier élément chauffant (41) et de la première unité de batterie (42) ; et
pour amener la seconde unité de relais à permettre la connexion électrique du second élément chauffant et de la seconde unité de batterie.

5. Système de commande de chauffage (100) pour les blocs-batteries branchés en parallèle selon la revendication 1, dans lequel en réponse à la température de la première unité de batterie (42) étant supérieure ou égale à un quatrième seuil, la première unité de gestion de batterie (32) est configurée :
pour amener la première unité de relais (31) à permettre la déconnexion électrique du premier élément chauffant (41) et de la seconde unité de batterie.

6. Système de commande de chauffage (100) pour les blocs-batteries branchés en parallèle selon la revendication 1, dans lequel en réponse à la température de la seconde unité de batterie étant supérieure ou égale à un quatrième seuil, la première unité de gestion de batterie (32) est configurée :
pour amener la seconde unité de relais à permettre la déconnexion électrique du second élément chauffant et de la seconde unité de batterie.

7. Système de commande de chauffage (100) pour les blocs-batteries branchés en parallèle selon la revendication 1, dans lequel la première unité de relais (31) comprend un premier relais (311), un deuxième relais (312) et un troisième relais (313), et la seconde unité de relais comprend un quatrième relais, un cinquième relais et un sixième relais ;
le premier relais (311) est connecté électriquement entre une première extrémité de l'onduleur (20) et une électrode négative de la première unité de batterie (42), le premier relais (311) est en outre connecté électriquement entre la première extrémité de l'onduleur (20) et une première extrémité du premier élément chauffant (41), le deuxième relais (312) est connecté électriquement entre une seconde extrémité de l'onduleur (20) et une seconde extrémité du premier élément chauffant (41), et le troisième relais (313) est connecté électriquement entre la seconde extrémité de l'onduleur (20) et une électrode positive de la première unité de batterie (42) ; et
le quatrième relais est connecté électriquement entre la première extrémité de l'onduleur (20) et une électrode négative de la seconde unité de batterie, le quatrième relais est en outre connecté électriquement entre la première extrémité de l'onduleur (20) et une première extrémité du second élément chauffant, le cinquième relais est connecté électriquement entre la seconde extrémité de l'onduleur (20) et une seconde extrémité du second élément chauffant, et le sixième relais est connecté électriquement entre la seconde extrémité de l'onduleur (20) et une électrode positive de la seconde unité de batterie.

8. Système de commande de chauffage (100) pour les blocs-batteries branchés en parallèle selon la revendication 7, dans lequel en réponse à la température de la première unité de batterie (42) et la température de la seconde unité de batterie étant inférieures au premier seuil, chacune de la première unité de gestion de batterie (32) et de la seconde unité de gestion de batterie émettant la première demande de chauffage, et la tension de la seconde unité de batterie étant supérieure à la tension de la première unité de batterie (42), la première unité de gestion de batterie (32) est configurée :
pour commander la connexion du quatrième relais, du cinquième relais et du sixième relais ; et
pour commander la connexion du premier relais (311) et du deuxième relais (312), et pour commander la déconnexion du troisième relais (313).

9. Système de commande de chauffage (100) pour les blocs-batteries branchés en parallèle selon la revendication 8, dans lequel en réponse à la température de la première unité de batterie (42) étant supérieure ou égale à un deuxième seuil, la première unité de gestion de batterie (32) est configurée :
pour commander la connexion du premier relais (311), du deuxième relais (312) et du troisième relais (313),
dans lequel le deuxième seuil est supérieur au premier seuil.

10. Système de commande de chauffage (100) pour les blocs-batteries branchés en parallèle selon la revendication 7, dans lequel en réponse à la température de la première unité de batterie (42) et la température de la seconde unité de batterie étant toutes deux inférieures au premier seuil, et l'une ou l'autre de la première unité de gestion de batterie (32) et de la seconde unité de gestion de batterie émettant une seconde demande de chauffage, la première unité de gestion de batterie (32) est configurée :
pour commander la connexion du premier relais (311) et du deuxième relais (312), et pour commander la déconnexion du troisième relais (313) ; et
pour commander la connexion des quatrième et cinquième relais, et pour commander la déconnexion du sixième relais,
dans lequel la seconde demande de chauffage indique une demande de chauffage alimenté par onduleur.

11. Système de commande de chauffage (100) pour les blocs-batteries branchés en parallèle selon la revendication 10, dans lequel en réponse au fait que la valeur minimale de la température de la première unité de batterie (42) et de la température de la seconde unité de batterie est supérieure ou égale à un troisième seuil, la première unité de gestion de batterie (32) est configurée :
pour commander la connexion du premier relais (311), du deuxième relais (312) et du troisième relais (313) ; et
pour commander la connexion du quatrième relais, du cinquième relais et du sixième relais.

12. Système de commande de chauffage (100) pour les blocs-batteries branchés en parallèle selon la revendication 7, dans lequel en réponse à la température de la première unité de batterie (42) étant supérieure ou égale à un quatrième seuil, la première unité de gestion de batterie (32) est configurée :
pour commander la connexion du premier relais (311) et du troisième relais (313), et pour commander la déconnexion du deuxième relais (312).

13. Système de commande de chauffage (100) pour les blocs-batteries branchés en parallèle selon la revendication 7, dans lequel en réponse à la température de la seconde unité de batterie étant supérieure ou égale à un quatrième seuil, la première unité de gestion de batterie (32) est configurée :
pour commander la connexion des quatrième et sixième relais, et pour commander la déconnexion du cinquième relais.
